# EUROPEAN PATENT APPLICATION

(11) **EP 4 525 513 A1**
(43) Date of publication of application: **19.03.2025**
(21) Application number: 23844792.4
(22) Date of filing: 17.02.2023
(51) Int. Cl.: H04W 28/06

(54) **NETWORK SLICE-BASED COMMUNICATION METHOD, ELECTRONIC DEVICE, AND STORAGE MEDIUM**

(30) Priority: 25.07.2022 CN 202210877908
(71) Applicant: ZTE Corporation, Shenzhen, Guangdong 518057 (CN)
(72) Inventor: ZHAI, Jingliang, Shenzhen, Guangdong 518057 (CN)
(74) Representative: Carangelo, Pierluigi
(86) International application number: PCT/CN2023/076854
(87) International publication number: WO 2024/021573

(57) **Abstract**

The present application provides a network slice-based communication method, an electronic device, and a storage medium. The method comprises: acquiring priority information of a target application (S210); acquiring data to be sent of the target application, and encapsulating said data to obtain a data packet (S220); mapping the priority information to a priority field of the data packet, and obtaining a target packet according to the data packet obtained after the mapping (S230); and sending the target packet to a router, so that the router routes the target packet to a target network slice, wherein the target network slice is determined by the router according to the priority information and a preset matching rule (S240).

## Description

### CROSS-REFERENCE TO RELATED APPLICATION

This application is filed on the basis of Chinese patent application No. 202210877908.5 filed July 25, 2022, and claims priority to the Chinese patent application, the entire contents of which are incorporated herein by reference.

### TECHNICAL FIELD

The present disclosure relates to, but not limited to, the technical field of communication, and more particularly, to a network slicing-based communication method, an electronic device, and a storage medium.

### BACKGROUND

A network slice is a logical network with specific network characteristics, segmented from an operator's communication network. A physical network can be abstractly divided into multiple network slices, each constituting an end-to-end logical network. The network slices are logically isolated from each other, and different network slices can provide different network characteristics.

Currently, an access network device can determine, according to the priority information of a Quality of Service (QoS) flow, a network slice to which a message is to be sent. However, in a user terminal device, the user's usage requirements vary with different applications. Since the access network device cannot determine, based on the usage requirement of an application, the network slice to which the message is to be sent, the message of the application may be sent to a network slice with mismatched network characteristics. Consequently, the user's usage requirements cannot be met, resulting in unsatisfactory user experience.

### SUMMARY

The following is a summary of the subject matter set forth in this description. This summary is not intended to limit the scope of protection of the claims.

Embodiments of the present disclosure provide a network slicing-based communication method, an electronic device, and a storage medium.

In accordance with a first aspect of the present disclosure, an embodiment provides a network slicing-based communication method, applied to a user terminal device in communication connection with a router, the method including: acquiring priority information of a target application; acquiring to-be-sent data of the target application and encapsulating the to-be-sent data to obtain a data packet; mapping the priority information to a priority field of the data packet, and obtaining a target message according to the data packet obtained after the mapping; and sending the target message to the router, such that the router routes the target message to a target network slice, where the target network slice is determined by the router according to the priority information and a preset matching rule.

In accordance with a second aspect of the present disclosure, an embodiment provides a network slicing-based communication method, applied to a router in communication connection with a user terminal device, the method including: receiving a target message from the user terminal device, where the target message is obtained from a mapped data packet obtained through mapping of a data packet, the data packet is obtained by the user terminal device by encapsulating to-be-sent data of a target application, the mapped data packet is obtained by the user terminal device by mapping priority information of the target application to a priority field of the data packet, and the priority information and the to-be-sent data of the target application are acquired by the user terminal device; parsing the target message to obtain the priority information; and determining a target network slice based on the priority information and a preset matching rule, and routing the target message to the target network slice.

In accordance with a third aspect of the present disclosure, an embodiment provides an electronic device, including: a memory, a processor, and a computer program stored in the memory and executable by the processor, where the computer program, when executed by the processor, causes the processor to carry out the network slicing-based communication method in accordance with the first aspect.

In accordance with a fourth aspect of the present disclosure, an embodiment provides a computer-readable storage medium, storing a computer-executable program which, when executed by a computer, causes the computer to carry out the network slicing-based communication method in accordance with the first aspect or the network slicing-based communication method in accordance with the second aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of an implementation environment according to an embodiment of the present disclosure;
FIG. 2 is a flowchart of a network slicing-based communication method applied to a user terminal device according to an embodiment of the present disclosure;
FIG. 3 is a flowchart of a method for obtaining association data according to another embodiment of the present disclosure;
FIG. 4 is a flowchart of a method for acquiring to-be-sent data according to another embodiment of the present disclosure;
FIG. 5 is a flowchart of a method for determining a target process ID according to another embodiment of the present disclosure;
FIG. 6 is a flowchart of a method for deleting association data according to another embodiment of the present disclosure;
FIG. 7 is a flowchart of a network slicing-based communication method applied to a router according to an embodiment of the present disclosure;
FIG. 8 is a flowchart of a method for updating priority information according to another embodiment of the present disclosure;
FIG. 9 is a flowchart of a method for routing a target message according to another embodiment of the present disclosure;
FIG. 10 is a flowchart of a communication mechanism according to an embodiment of the present disclosure; and
FIG. 11 is a structural diagram of an electronic device according to another embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Currently, an access network device can determine, according to the priority information of a Quality of Service (QoS) flow, a network slice to which a message is to be sent. However, in a user terminal device, the user's usage requirements vary with different applications. Since the access network device cannot determine, based on the usage requirement of an application, the network slice to which the message is to be sent, the message of the application may be sent to a network slice with mismatched network characteristics. Consequently, the user's usage requirements cannot be met, resulting in unsatisfactory user experience.

To solve the problem that an access network device cannot determine, according to a usage requirement of an application, a network slice to which a message is to be sent, the present disclosure provides a network slicing-based communication method, an electronic device, and a storage medium. The method is applied to a user terminal device in communication connection with a router, and includes: acquiring priority information of a target application; acquiring to-be-sent data of the target application and encapsulating the to-be-sent data to obtain a data packet; mapping the priority information to a priority field of the data packet, and obtaining a target message according to the data packet obtained after the mapping; and sending the target message to the router, such that the router routes the target message to a target network slice, where the target network slice is determined by the router according to the priority information and a preset matching rule. According to the schemes provided in the embodiments of the present disclosure, the user terminal device first acquires priority information set for the target application, acquires to-be-sent data of the target application, maps the priority information to a priority field of a data packet obtained by encapsulating the to-be-sent data, obtains a target message according to the mapped data packet, and sends the target message to the router. The router can determine the priority information according to the target message, determine a target network slice according to a matching rule, and then routes the target message to the target network slice. In this way, priorities can be defined for messages with small granularity and high flexibility at the application level of the user terminal device, and the router can determine, according to priority information of applications, target network slices to which target messages are to be sent, and then route the target messages of the applications having different usage requirements to the network slices with matched network characteristics. This is more in line with the development trend of diversified core networks and can meet the usage requirements of the user, thereby optimizing network resources and improving user experience.

The embodiments of the present invention will be further described in detail below in conjunction with the accompanying drawings.

An embodiment of the present disclosure provides a network slicing-based communication method, which may be applied to a user terminal device, a router, or software running in a user terminal device or a router.

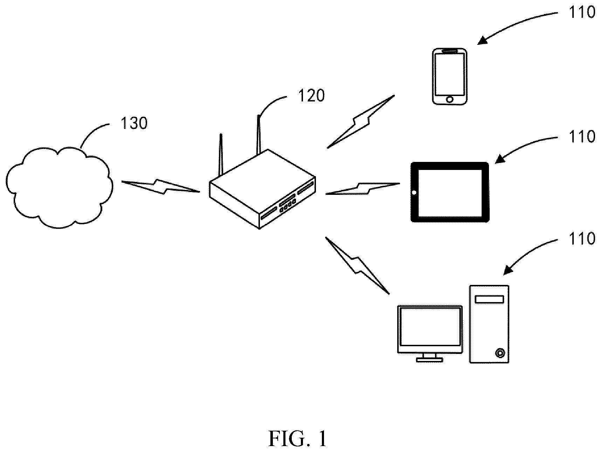

FIG. 1 is a schematic diagram of an implementation environment according to an embodiment of the present disclosure. The implementation environment includes a user terminal device 110 and a router 120. The user terminal device 110 is in communication connection with the router 120.

The router 120 can access a core network 130 in a wired or wireless manner. The core network 130 supports multi-slice links. The router 120 can route messages with different priorities to different network slices through priority-based routing, thereby providing different network services for messages with different priorities.

The user terminal device 110 may be, but not limited to, a Personal Computer (PC), a mobile phone, a smartphone, a Personal Digital Assistant (PDA), a wearable device, a Pocket PC (PPC), a tablet computer, a camera device having a photographing function, an acquisition device, etc. The user terminal device 110 and the router 120 may be directly or indirectly connected through wired or wireless communication, which is not limited in the embodiments of the present disclosure.

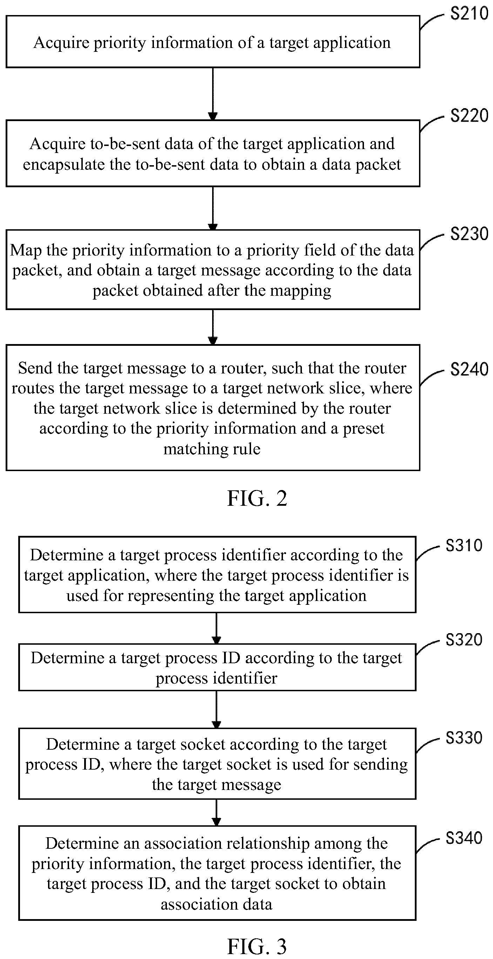

Based on the embodiment shown in FIG. 1, refer to FIG. 2. FIG. 2 is a flowchart of a network slicing-based communication method according to an embodiment of the present disclosure. The network slicing-based communication method may be applied to a user terminal device in communication connection with a router. The network slicing-based communication method includes, but not limited to, the following steps S210 to S240.

At S210, priority information of a target application is acquired.

At S220, to-be-sent data of the target application is acquired and encapsulated to obtain a data packet.

At S230, the priority information is mapped to a priority field of the data packet, and a target message is obtained according to the data packet obtained after the mapping.

At S240, the target message is sent to a router, such that the router routes the target message to a target network slice, where the target network slice is determined by the router according to the priority information and a preset matching rule.

It can be understood that with the continuous development of 5G networks, wireless network slicing technologies have also evolved. Network slicing is an on-demand networking method that allows operators to separate multiple virtual end-to-end networks on a unified infrastructure. Each network slice is logically isolated from the wireless access network to the bearer network and to the core network to adapt to various types of applications. Network slicing is a concept based on logic, which is the reorganization of resources. Reorganization is to select the required virtual machines and physical resources for a specific communication service type according to the Service-Level Agreement (SLA). Radio resources can also be sliced in different ways in 5G networks. In other words, different Physical Resource Blocks (PRBs) are allocated to different network slices. Even in conventional 4G networks, the need for different services to use different slice links has gradually become common. In addition to the trend on the network side, with the increasing popularity of wireless terminal devices, network terminal devices often used by users are now gradually changing from computers to mobile phones, tablets, etc. The number of applications installed on the user terminal device is increasing continuously, and the user has different usage requirements for the applications. The user sets priority information for a target application according to the usage requirements, and when the target application needs to perform communication, the user terminal device maps the priority information to a priority field of a data packet obtained by encapsulating to-be-sent data by the target application, and obtains a target message according to the mapped data packet. After receiving the target message, the router parses the target message to obtain the priority information, determines a target network slice according to a matching rule, and finally routes the target message to the target network slice. In this way, different services can be provided for different target applications, so as to maximize user experience. Based on this, the user terminal device first acquires priority information set for the target application, acquires to-be-sent data of the target application, maps the priority information to a priority field of a data packet obtained by encapsulating the to-be-sent data to obtain a mapped data packet, obtains a target message according to the mapped data packet, and sends the target message to the router. The router can determine the priority information according to the target message, determine a target network slice according to a matching rule, and then routes the target message to the target network slice. In this way, priorities can be defined for messages with small granularity and high flexibility at the application level of the user terminal device, and the router can determine, according to priority information of applications, target network slices to which target messages are to be sent, and then route the target messages of the applications having different usage requirements to the network slices with matched network characteristics. This is more in line with the development trend of diversified core networks and can meet the usage requirements of the user, thereby optimizing network resources and improving user experience.

It should be noted that after parsing the priority information, the router determines a target label corresponding to the priority information based on the matching rule. Because the target label matches the target network slice, the router routes the target message to the target network slice based on the target label.

In practice, a plug-in interface for setting priority information is configured on the user terminal device. The plug-in interface serves as an interface for the user to set priorities for applications. Through the plug-in interface, an application already installed on the user terminal device can be found through search. On the plug-in interface, the user may set different priorities for different applications according to usage requirements. Then, the user terminal device maps the priority information to a priority field of a data packet obtained by encapsulating to-be-sent data by the target application, and obtain a target message according to the mapped data packet. The router sends the target message to the target network slice having network characteristics matching the usage requirement. In this way, network resources can be optimized, user experience can be improved, and the user can customize a data transmission rule for the user terminal device according to the usage requirement.

It should be noted that the network slicing-based communication method of this embodiment is applicable not only to a home area network scenario with Wireless Local Area Network (WLAN) coverage, but also to a public network scenario with wireless network coverage.

In addition, referring to FIG. 3, in an embodiment, after S210 in the embodiment shown in FIG. 2 is executed, the method further includes, but not limited to, the following steps S310 to S340.

At S310, a target process mark is determined according to the target application, where the target process mark is used for representing the target application.

At S320, a target process ID is determined according to the target process mark.

At S330, a target socket is determined according to the target process ID, where the target socket is used for sending the target message.

At S340, an association relationship among the priority information, the target process mark, the target process ID, and the target socket is determined to obtain association data.

It can be understood that after the priority information of the target application is acquired, the target process mark corresponding to the target application needs to be determined first. The target process mark includes, but not limited to, a process name. After the target application is run, a target process ID, namely, PID, needs to be determined according to the target process mark for an application process of the target application. When the target application initiates a network communication connection to establish a communication socket, a target socket is determined according to the target process ID. Finally, an association relationship among the priority information, the target process mark, the target process ID, and the target socket is determined to obtain association data. After a priority is set for each application, multiple pieces of association data are obtained. The association data may be organized in the form of a linked list, or a hash table, etc.

It should be noted that the process name of the application process of the target application is fixed every time the target application is run, so that the process name can be used as the target process mark.

It should be noted that for user-mode processes, the association data among the priority information, the target process name, the PID, and the socket may be organized using a fixed data structure. In addition, for kernel-mode processes, the association data among the priority information, the PID, and the socket may also be organized using the same data structure.

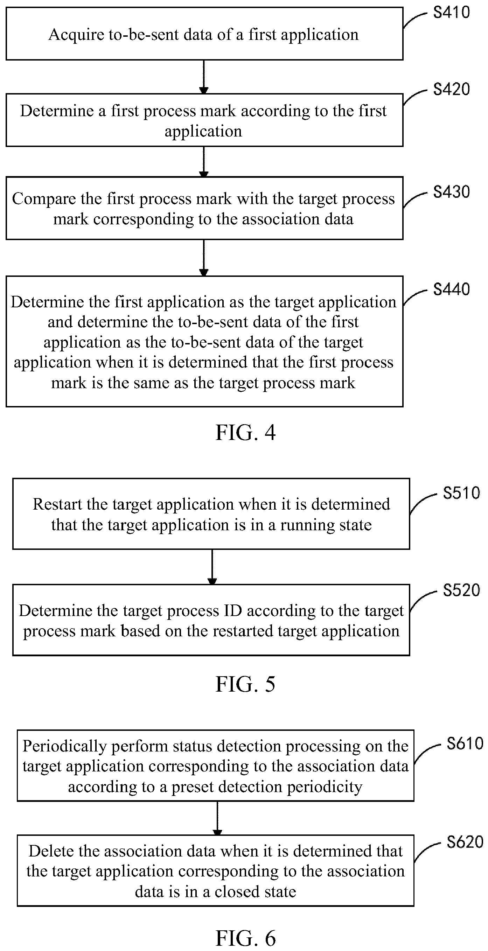

In addition, referring to FIG. 4, in an embodiment, before S220 in the embodiment shown in FIG. 2 is executed, the method further includes, but not limited to, the following steps S410 to S440.

At S410, to-be-sent data of a first application is acquired.

At S420, a first process mark is determined according to the first application.

At S430, the first process mark is compared with the target process mark corresponding to the association data.

At S440, the first application is determined as the target application and the to-be-sent data of the first application is determined as the to-be-sent data of the target application when it is determined that the first process mark is the same as the target process mark.

It can be understood that the first application is any application installed in the user terminal device. When the first application establishes a network communication connection and generates the to-be-sent data, the user terminal device determines the first process mark corresponding to the first application. Because association data is generated after the user sets the priority of the target application, the user terminal device determines whether the first process mark is the same as a target process mark among all the association data, and when determining that the first process mark is the same as a target process mark, determines the first application as the target application, and determines the to-be-sent data of the first application as the to-be-sent data of the target application. When it is determined that the first process mark is different from all target process marks, indicating that no priority has been set for the first application, the router routes the to-be-sent data of the first application to a default link.

In addition, referring to FIG. 5, in an embodiment, S320 in the embodiment shown in FIG. 3 includes, but not limited to, the following steps S510 and S520.

At S510, the target application is restarted when it is determined that the target application is in a running state.

At S520, the target process ID is determined according to the target process mark based on the restarted target application.

It can be understood that when the target application is in a running state during setting of priority information by the user, the target application needs to be restarted. The target process ID may change after the restart. In this case, the target process ID needs to be re-determined, and then mapping processing is performed on the priority field of the data packet of the target application, to ensure the stability and reliability of the priority setting process. In addition, when the target application is in a closed state during setting of priority information by the user, the target process ID can be determined only after the target application is started, so there is no need to perform an additional restart operation on the target application.

In addition, in an embodiment, S240 in the embodiment shown in FIG. 2 includes, but not limited to, a following operation:
sending the target message to the router based on the target socket.

It can be understood that when the user terminal device sends the target message to the router, the target socket of communication recorded in a socket buffer (skb) can be used as a link to map the priority information to a priority field of a data packet of a skb_buff data structure, so as to complete the transmission of the priority information.

In addition, referring to FIG. 6, in an embodiment, the network slicing-based communication method further includes, but not limited to, the following steps S610 to S620.

At S610, status detection processing is periodically performed on the target application corresponding to the association data according to a preset detection periodicity.

At S620, the association data is deleted when it is determined that the target application corresponding to the association data is in a closed state.

It can be understood that after the priorities of the applications are set, redundant association data needs to be deleted periodically in order to improve the processing efficiency. A detection periodicity is set to periodically traverse all the association data, and state detection processing is performed on the target applications corresponding to the association data to determine a current status of each of the target applications. When a target application is in a closed state, i.e., a network communication connection established by the target application is already released, the association data corresponding to the target application is determined as redundant data and thus deleted, thereby improving the processing efficiency of the target applications in the running state.

In practice, the detection periodicity may be determined by setting a timer and setting a timing threshold for the timer. When a timing value of the timer is equal to the timing threshold, all the association data is traversed, state detection processing is performed on the target applications corresponding to the association data, and the association data which is determined as redundant data is deleted. After the traversal is completed, the timer restarts timing. As such, the association data is traversed only once in the detection periodicity. The timing threshold of the timer can be selected by the user according to the actual processing effect.

In addition, in an embodiment, before S210 in the embodiment shown in FIG. 2 is executed, the method further includes, but not limited to, a following operation:
acquiring application information, where the application information is used for representing applications installed in the user terminal device, and the application information is further used for determining the target application.

It can be understood that because the user can only set priorities for applications already installed on the user terminal device, information of the applications needs to be acquired, such that the user can learn all the applications already installed on the user terminal device, and determine target applications among all the installed applications.

In addition, in an embodiment, the priority information includes at least one of level information, application type information, or network characteristic information;
the level information includes at least one of high priority information, medium priority information, or low priority information;
the application type information includes at least one of audio type information, video type information, game type information, or web page type information; and
the network characteristic information includes at least one of minimum delay characteristic information, maximum throughput characteristic information, reliable transmission characteristic information, or minimum-cost transmission characteristic information.

It can be understood that in a priority field inherent to a message, the user may set a rule for the priority field according to the usage requirement. For example, when an IPv4 target message is generated, the priority information is mapped to a Type of Service (ToS) field of the target message.

The ToS field includes bit 0 to bit 8. Priorities corresponding to bit 0 to bit 2 in the ToS field are in a range of 0 to 7. In the ToS field:
1. Bit 0 to bit 2 in the ToS field may be used for determining the level information:
   setting the priority to 0 when the level information is the low priority information;
   setting the priority to 4 when the level information is the medium priority information; and
   setting the priority to 7 when the level information is the high priority information.
2. Bit 0 to bit 2 in the ToS field may be used for determining the application type information:
   setting the priority to 5 when the level information is the audio type information;
   setting the priority to 4 when the level information is the video type information or the game type information;
   setting the priority to 3, 2, or 1 when the level information is the web page type information; and
   setting the priority to 0 when the level information is other types of information;
3. Bit 3 to bit 7 in the ToS field may be used for determining the network characteristic information:
   setting bit 3 in the ToS field to 1 when the network characteristic information is the minimum delay characteristic information;
   setting bit 4 in the ToS field to 1 when the network characteristic information is the maximum throughput characteristic information;
   setting bit 5 in the ToS field to 1 when the network characteristic information is the reliable transmission characteristic information; and
   setting bit 6 in the ToS field to 1 when the network characteristic information is the minimum-cost transmission characteristic information.

It should be noted that as for the classification of the priority information, the priority information includes, but not limited to, level information, application type information, and network characteristic information. When the user sets priorities for applications, multiple types of priorities may be set for one application. For example, a message of an application needs to satisfy a minimum delay characteristic and be limited to a web page type.

It should be noted that the priority information mapping mechanism is not limited to rules specified in standard protocol frameworks, and the user can set rules for the priority field.

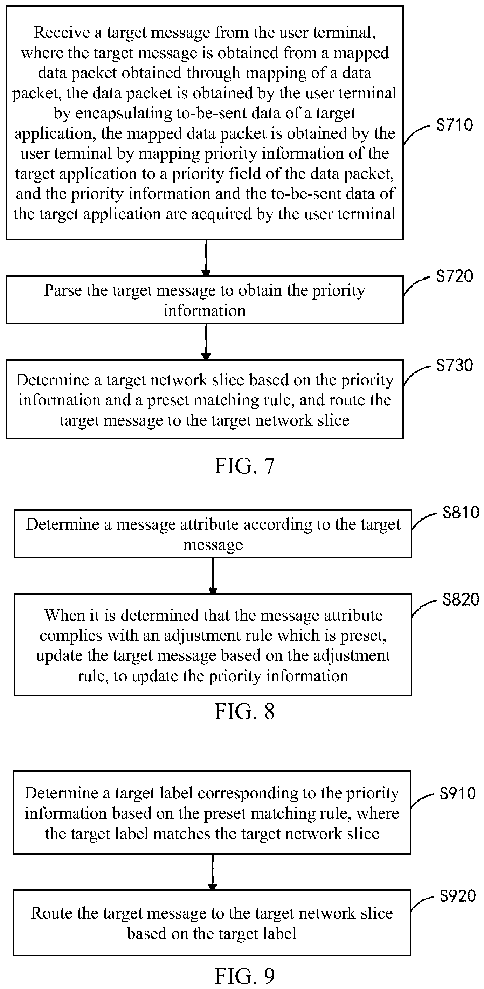

Based on the embodiment shown in FIG. 1, refer to FIG. 7. FIG. 7 is a flowchart of a network slicing-based communication method according to an embodiment of the present disclosure. The network slicing-based communication method may be applied to a router in communication connection with a user terminal device. The network slicing-based communication method includes, but not limited to, the following steps S710 to S730.

At S710, a target message from the user terminal device is received, where the target message is obtained from a mapped data packet obtained through mapping of a data packet, the data packet is obtained by the user terminal device by encapsulating to-be-sent data of a target application, the mapped data packet is obtained by the user terminal device by mapping priority information of the target application to a priority field of the data packet, and the priority information and the to-be-sent data of the target application are acquired by the user terminal device.

At S720, the target message is parsed to obtain the priority information.

At S730, a target network slice is determined based on the priority information and a preset matching rule, and the target message is routed to the target network slice.

It can be understood that the specific embodiments of the network slicing-based communication method applied to a router are basically the same as the specific embodiments of the network slicing-based communication method applied to a user terminal device, so the details will not be repeated here. Based on this, the user terminal device first acquires priority information set for the target application, acquires to-be-sent data of the target application, maps the priority information to a priority field of a data packet obtained by encapsulating the to-be-sent data to obtain a mapped data packet, obtains a target message according to the mapped data packet, and sends the target message to the router. The router can determine the priority information according to the target message, determine a target network slice according to a matching rule, and then routes the target message to the target network slice. In this way, priorities can be defined for messages with small granularity and high flexibility at the application level of the user terminal device, and the router can determine, according to priority information of applications, target network slices to which target messages are to be sent, and then route the target messages of the applications having different usage requirements to the network slices with matched network characteristics. This is more in line with the development trend of diversified core networks and can meet the usage requirements of the user, thereby optimizing network resources and improving user experience.

In addition, in an embodiment, S720 in the embodiment shown in FIG. 7 includes, but not limited to, a following operation:
parsing a ToS field of the target message or a Traffic Class (TC) field of the target message to obtain the priority information.

It can be understood that a parameter in the ToS field of the IPv4 target message is priority information, and a parameter of a TC field of an IPv6 target message is priority information.

It should be noted that both the ToS field and the TC field are protocol-specified fields, so mapping the priority information to such a protocol-specified priority field in the target message to obtain the target message will not cause new network overheads.

It should be noted that on the basis of an existing network protocol, the user can set priorities for applications according to the usage requirements, such that the applications can be used in both a home environment and an environment with wireless network coverage. Not only user experience is improved, but also has residual significance for the configuration of network resources.

In addition, referring to FIG. 8, in an embodiment, before S720 in the embodiment shown in FIG. 7 is executed, the method further includes, but not limited to, the following steps S810 and S820.

At S810, a message attribute is determined according to the target message.

At S820, when it is determined that the message attribute complies with an adjustment rule which is preset, the target message is updated based on the adjustment rule, to update the priority information.

It can be understood that after receiving the target message, the router can determine the message attribute according to the target message. The message attribute includes, but not limited to, a source address, a destination address, a source port, and a destination port of the target message. The adjustment rule defines several message attributes to be adjusted, and priority information corresponding to the message attributes. When the message attribute of the target message is consistent with a message attribute to be adjusted, the parameter in the priority field of the target message is updated based on the adjustment rule, to update the priority information, such that the priority of the target message is adjusted. Then, the target message with the adjusted priority is routed to the corresponding network slice. In this way, the reliability of transmission of the target message can be ensured.

In addition, referring to FIG. 9, in an embodiment, S730 in the embodiment shown in FIG. 7 includes, but not limited to, the following steps S910 and S920.

At S910, a target label corresponding to the priority information is determined based on the preset matching rule, where the target label matches the target network slice.

At S920, the target message is routed to the target network slice based on the target label.

It can be understood that after parsing the priority information, the router can label the target message based on a ToS matching rule, determine a target label corresponding to the priority information, and then route the target messages with different labels to different network slices by policy-based routing.

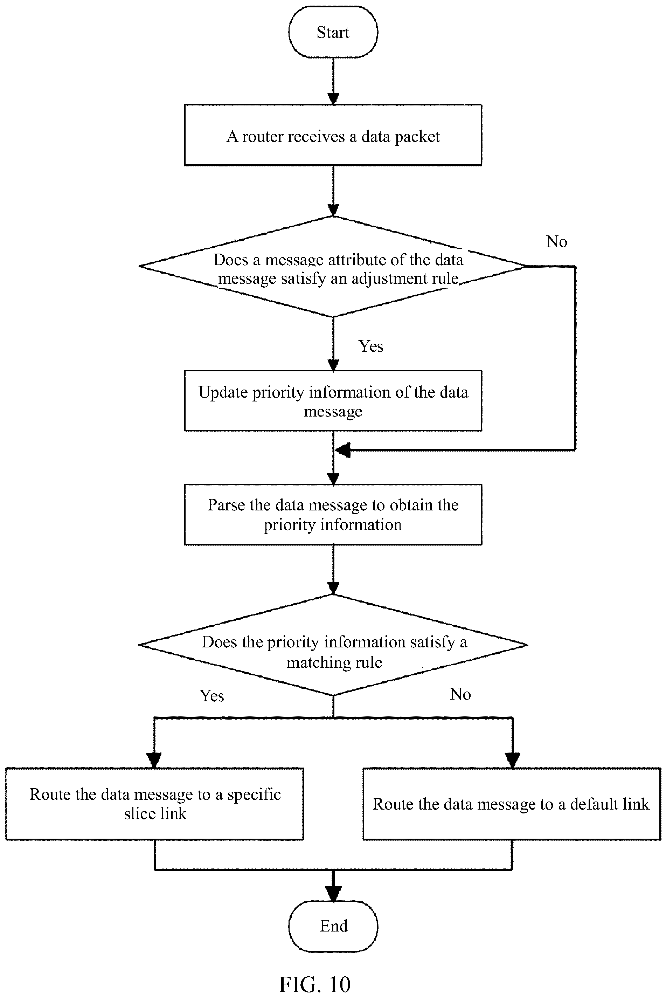

In addition, refer to FIG. 10. FIG. 10 is a flowchart of a communication mechanism according to an embodiment of the present disclosure.

It can be understood that after receiving the data message, the router determines whether the message attribute of the data message satisfies the adjustment rule. If the adjustment rule is satisfied, the router needs to update the priority information of the data message according to the adjustment rule, and then parse the data message to obtain the priority information. If the adjustment rule is not satisfied, the router directly parses the data message to obtain the priority information, and then determines whether the priority information of the data message satisfies the matching rule. If the matching rule is satisfied, the router routes the data message to a specific slice link. If the matching rule is not satisfied, the router routes the data message to a default link.

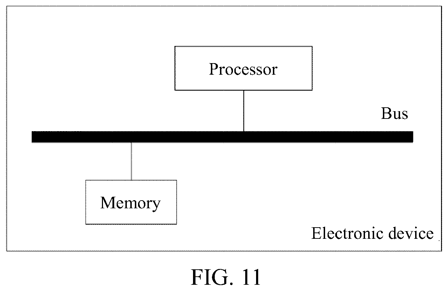

In addition, referring to FIG. 11, an embodiment of the present disclosure provides an electronic device.

In an embodiment, the electronic device includes one or more processors and one or more memories. FIG. 11 uses one processor and one memory as an example. The processor and the memory may be connected by a bus or in other ways. Connection by a bus is used as an example in FIG. 11.

The memory, as a non-transitory computer-readable storage medium, may be configured for storing a non-transitory software program and a non-transitory computer-executable program, for example, the network slicing-based communication method in the embodiments of the present disclosure. The processor executes the non-transitory software program and the non-transitory computer-executable program stored in the memory, to carry out the network slicing-based communication method in the embodiments of the present disclosure.

The memory may include a program storage area and a data storage area. The program storage area may store an operating system, and an application required by at least one function. The data storage area may store data and the like required for executing the network slicing-based communication method in the embodiments of the present disclosure. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the electronic device via a network. Examples of the network include, but not limited to, the Internet, an intranet, a local area network, a mobile communication network, and combinations thereof.

The non-transitory software program and the non-transitory computer-executable program required for carrying out the network slicing-based communication method in the embodiments of the present disclosure are stored in the memory which, when executed by one or more processors, cause the one or more processors to carry out the network slicing-based communication method applied to a user terminal device in the embodiments of the present disclosure, for example, carry out the method steps S210 to S240 in FIG. 2, the method steps S310 to S340 in FIG. 3, the method steps S410 to S440 in FIG. 4, the method steps S510 to S520 in FIG. 5, or the method steps S610 to S620 in FIG. 6. The user terminal device acquires priority information of a target application; acquires to-be-sent data of the target application and encapsulates the to-be-sent data to obtain a data packet; maps the priority information to a priority field of the data packet, and obtains a target message according to the data packet obtained after the mapping; and sends the target message to a router, such that the router routes the target message to a target network slice, where the target network slice is determined by the router according to the priority information and a preset matching rule. Based on this, the user terminal device first acquires priority information set for the target application, acquires to-be-sent data of the target application, maps the priority information to a priority field of a data packet obtained by encapsulating the to-be-sent data to obtain a mapped data packet, obtains a target message according to the mapped data packet, and sends the target message to the router. The router can determine the priority information according to the target message, determine a target network slice according to the priority information and a matching rule, and then routes the target message to the target network slice. In this way, priorities can be defined for messages with small granularity and high flexibility at the application level of the user terminal device, and the router can determine, according to priority information of applications, target network slices to which target messages are to be sent, and then route the target messages of the applications having different usage requirements to the network slices with matched network characteristics. This is more in line with the development trend of diversified core networks and can meet the usage requirements of the user, thereby optimizing network resources and improving user experience.

In addition, an embodiment of the present disclosure provides a computer-readable storage medium, storing a computer-executable instruction which, when executed by a processor or controller, for example, by a processor in the electronic device embodiment described above, may cause the processor to carry out the network slicing-based communication method applied to a user terminal device in the foregoing embodiments, for example, carry out the method steps S210 to S240 in FIG. 2, the method steps S310 to S340 in FIG. 3, the method steps S410 to S440 in FIG. 4, the method steps S510 to S520 in FIG. 5, or the method steps S610 to S620 in FIG. 6. The user terminal device acquires priority information of a target application; acquires to-be-sent data of the target application and encapsulates the to-be-sent data to obtain a data packet; maps the priority information to a priority field of the data packet, and obtains a target message according to the data packet obtained after the mapping; and sends the target message to a router, such that the router routes the target message to a target network slice, where the target network slice is determined by the router according to the priority information and a preset matching rule. Alternatively, the computer-executable instruction may cause the processor to carry out the network slicing-based communication method applied to a router in the foregoing embodiments, for example, carry out the method steps S710 to S730 in FIG. 7, the method steps S810 to S820 in FIG. 8, or the method steps S910 to S920 in FIG. 9. The router receives a target message from a user terminal device, where the target message is obtained from a mapped to-be-sent data packet obtained through mapping of a data packet, the to-be-sent data packet is obtained by the user terminal device by encapsulating to-be-sent data of a target application, the mapped to-be-sent data packet is obtained by the user terminal device by mapping priority information of the target application to a priority field of the to-be-sent data packet, and the priority information and the to-be-sent data of the target application are acquired by the user terminal device; parses the target message to obtain the priority information; and determines a target network slice based on the priority information and a preset matching rule, and routes the target message to the target network slice. Based on this, the user terminal device first acquires priority information set for the target application, acquires to-be-sent data of the target application, maps the priority information to a priority field of a data packet obtained by encapsulating the to-be-sent data to obtain a mapped data packet, obtains a target message according to the mapped data packet, and sends the target message to the router. The router can determine the priority information according to the target message, determine a target network slice according to the priority information and a matching rule, and then routes the target message to the target network slice. In this way, priorities can be defined for messages with small granularity and high flexibility at the application level of the user terminal device, and the router can determine, according to priority information of applications, target network slices to which target messages are to be sent, and then route the target messages of the applications having different usage requirements to the network slices with matched network characteristics. This is more in line with the development trend of diversified core networks and can meet the usage requirements of the user, thereby optimizing network resources and improving user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the essence of the present disclosure. Such equivalent modifications or replacements fall within the scope defined by the claims of the present disclosure.

## Claims

1. A network slicing-based communication method, applied to a user terminal device in communication connection with a router, the method comprising:
acquiring priority information of a target application;
acquiring to-be-sent data of the target application and encapsulating the to-be-sent data to obtain a data packet;
mapping the priority information to a priority field of the data packet, and obtaining a target message according to the data packet obtained after the mapping; and
sending the target message to the router, such that the router routes the target message to a target network slice, wherein the target network slice is determined by the router according to the priority information and a preset matching rule.

2. The method of claim 1, wherein after acquiring priority information of a target application, the method further comprises:
determining a target process mark according to the target application, wherein the target process mark is used for representing the target application;
determining a target process ID (PID) according to the target process mark;
determining a target socket according to the target process ID, wherein the target socket is used for sending the target message; and
determining an association relationship among the priority information, the target process mark, the target process ID, and the target socket to obtain association data.

3. The method of claim 2, wherein before acquiring to-be-sent data of the target application and encapsulating the to-be-sent data to obtain a data packet, the method further comprises:
acquiring to-be-sent data of a first application;
determining a first process mark according to the first application;
comparing the first process mark with the target process mark corresponding to the association data; and
determining the first application as the target application and determining the to-be-sent data of the first application as the to-be-sent data of the target application, in response to determining that the first process mark is the same as the target process mark.

4. The method of claim 2, wherein determining a target process ID according to the target process mark comprises:
restarting the target application in response to determining that the target application is in a running state; and
determining the target process ID according to the target process mark based on the restarted target application.

5. The method of claim 2, further comprising:
periodically performing status detection processing on the target application corresponding to the association data according to a preset detection periodicity; and
deleting the association data in response to determining that the target application corresponding to the association data is in a closed state.

6. The method of claim 1, wherein the priority information comprises at least one of level information, application type information, or network characteristic information;
the level information comprises at least one of high priority information, medium priority information, or low priority information;
the application type information comprises at least one of audio type information, video type information, game type information, or web page type information; and
the network characteristic information comprises at least one of minimum delay characteristic information, maximum throughput characteristic information, reliable transmission characteristic information, or minimum-cost transmission characteristic information.

7. A network slicing-based communication method, applied to a router in communication connection with a user terminal device, the method comprising:
receiving a target message from the user terminal device, wherein the target message is obtained from a data packet obtained after mapping, the data packet is obtained by the user terminal device by encapsulating to-be-sent data of a target application, the mapped data packet is obtained by the user terminal device by mapping priority information of the target application to a priority field of the data packet, the priority information and the to-be-sent data of the target application are acquired by the user terminal device;
parsing the target message to obtain the priority information; and
determining a target network slice based on the priority information and a preset matching rule, and routing the target message to the target network slice.

8. The method of claim 7, wherein parsing the target message to obtain the priority information comprises:
parsing a Type of Service (ToS) field of the target message or a Traffic Class (TC) field of the target message to obtain the priority information.

9. The method of claim 7, wherein before parsing the target message to obtain the priority information, the method further comprises:
determining a message attribute according to the target message; and
in response to determining that the message attribute complies with an preset adjustment rule, updating the target message based on the preset adjustment rule, to update the priority information.

10. The method of claim 7, wherein determining a target network slice based on the priority information and a preset matching rule, and routing the target message to the target network slice comprises:
determining a target label corresponding to the priority information based on the preset matching rule, wherein the target label matches the target network slice; and
routing the target message to the target network slice based on the target label.

11. An electronic device, comprising: a memory, a processor, and a computer program stored in the memory and executable by the processor, wherein the computer program, when executed by the processor, causes the processor to carry out the network slicing-based communication method of any of claims 1 to 6.

12. A computer-readable storage medium, storing a computer-executable program which, when executed by a computer, causes the computer to carry out the network slicing-based communication method of any of claims 1 to 6 or the network slicing-based communication method of any of claims 7 to 10.
